# EUROPEAN PATENT SPECIFICATION

(11) **EP 4 194 930 B1**
(45) Date of publication and mention of the grant of the patent: **13.08.2025**
(21) Application number: 21020618.1
(22) Date of filing: 07.12.2021
(51) Int. Cl.: G02C 1/02

(54) **RIMLESS EYEGLASSES WITH IMPROVED FASTENING ELEMENTS**
RANDLOSE BRILLE MIT VERBESSERTEN BEFESTIGUNGSELEMENTEN
LUNETTES SANS MONTURES PRÉSENTANT DES ÉLÉMENTS DE FIXATION AMÉLIORÉS

(43) Date of publication of application: 14.06.2023
(73) Proprietor: BLACKFIN S.P.A., 32027 Taibon Agordino (BL) (IT)
(72) Inventor: Del Din, Nicola, 32021 Agordo (BL) (IT)
(74) Representative: Spagnolo, Chiara

(56) References cited:
- EP-B1- 0 611 978
- CA-C- 1 334 255
- CN-A- 104 460 026
- CN-A- 107 065 216
- FR-A- 377 677
- US-A1- 2005 094 091
- US-A1- 2014 268 004

## Description

The present invention relates to eyeglasses of the rimless type with improved fixing elements.

The invention is particularly, but not exclusively, applicable in the field of the production and/or marketing of eyeglasses, both for corrective use and for protection against the sun, or even for personal beautification.

In the eyewear field, various structures of eyeglasses have long been known, which can be created with different materials and with various fixing solutions between the components, according to particular technical, aesthetic, commercial or production requirements. In the eyewear field, various structures of eyeglasses have long been known, which can be created with different materials and with various fixing solutions between the components, according to particular technical, aesthetic, commercial or production requirements. As an alternative, lightened frames are known, which are generally made up of metal, wherein the front piece has a reduced weight and size, being limited to the upper continuous part which is laterally connected to the temples, whereas the lenses are directly fixed to it by means of screws or mechanical fixings, or they are encircled like a ring with a flexible wire housed in a concealable groove obtained on the edge of each lens.

Furthermore, advantageous solutions of discontinuous metal frames have been known for years; they are very appreciated and widespread for their extreme lightness conferred to the eyeglasses and for their aesthetic appeal. They are also characterized by a frame front divided into three main elements, structurally separated between each other, which are individually fixed to the lenses being interconnected from them. Conventionally, eyeglasses made up in this way are considered as rimless eyeglasses, or glasant in French; as a result, the frame of a such eyeglasses is called rimless frame.

Among the experts in this field, said divided front piece of a rimless frame is conventionally called three-piece front, being made up of the following three main elements:
- a central element, conventionally called bridge, which connects between each other the lenses and supports them maintaining them in the correct position of use. To this end, said bridge leans against the nose by means of spacing arms equipped with hooking means for small end plates, that is supporting nose pads;
- two side elements, conventionally called end pieces, or also endpieces or side front pieces, acting as a joint between one lens and the corresponding side temple; in general, said end pieces are symmetrically identical to each other, being therefore a right end piece and a left end piece.

In more technical detail with reference to each end piece, it can be noted that it is firmly fixed to a single lens near the external side edge, that is in the so-called temple area, and is shaped in such a way as to allow the connection to the corresponding side temple by means of hinging constraint, as if it is its prolongation. To this end, an end piece must provide, in the end adjacent to said temple, a welded base element or any means constituting the fixed element of the adopted hinging system, in such a way as to be able to connect the temple to the end piece with the correct alignment and rotation. Furthermore, it can be noted that said coupling end piece - temple assures also the correct fitting of the glasses, since it is necessary to maintain the reciprocal positioning over the time, with maximum repeatability, and without loosening of the hinge and/or of the fixing.

Therefore it has been found, among professionals in the optical sector, that the above-mentioned frame of the rimless type is very appreciated on the market, particularly for prescription eyeglasses, since it is increasingly required due to its extreme lightweight and its remarkable elegance. However, it is also known that in such a discontinuous, or deconstructed frame the system adopted for fixing said bridge and said end pieces to the lenses is the greatest technical problem to be solved for the professional optician, who has to assemble the eyeglasses on a case-by-case basis on tailored lenses, according to the need of each single client.

In general, it is known that a fixing system of said bridge and of said end pieces to the lenses must contextually be very solid and durable over the time, as well as light in weight and aesthetically pleasant, or according to the minimal design of rimless glasses. Furthermore, it was found, among the experts in the field, that said fixing system is provided with extreme precision and execution accuracy by the professional optician, with a high error rate and/or malfunctioning. Furthermore, it has been found that the bridges and the end pieces in the most common rimless glasses are made with a welded and folded metallic wire, with a reduced section, and the major problem lies in stabilizing the fixing of a single cylindrical portion inserted in a hole obtained in the lens, avoiding excessive rotations or twists.

In more technical detail, in recent years various fixing solutions for bridges and end pieces have been suggested, such as pins, inserts, screws, glues or other systems even combined with each other. Generally, the most lightweight rims provide to integrate in a stabilized, that is integral, way, an end portion of said components in a blind or passing-through seat obtained in the thickness of the lens, like a slot. To this end, the use of a transparent glue for optic uses laid inside said slot is common. Moreover, it is widely known the use of conventional mechanical fixings such as screws and/or bolts directly applied from the front side, through the lens, or applied from the inside in a concealable manner.

Integrated fixing solutions are also known, wherein a deformable sealing insert is inserted in the lens in a hole or through eyelet, like an opposite expansion plug, that is, inserted from the outside with respect to the end of the component to be fixed; said component, being a bridge or an end piece obtained by folded wire. By way of example only, see DE20320629 (Silhouette) or EP0561763 (Silhouette) or even US2017160560 (Goetti), wherein the holding insert is inserted from the outside and can be seen from the front side, while the end of the component is inserted by pressure from the inside, as a pin, having a cylindrical shape with ring protrusions or gripping ribs. Taking into consideration the circular section of the element to be inserted, generally, two parallel elements inserted as a pair are provided, in order to avoid excessive rotations or twists.

Furthermore, fixing solutions without inserts and with single wire, with complex shape, are known, wherein an end is inserted in the slot and then folded several times for anchoring in recesses or grooves, avoiding in this way the above-mentioned excessive rotations or twists; then there is an adhesive material for stabilizing the fixing. With reference to such solutions, see by way of example only, US6860597 (Carlon) or DE102006007265 (Langbein).

Furthermore, quick fixing solutions, that is spring fixing solutions are known, which are technically more advanced, do not provide reported or additional elements being elastically deformable in shape and material, such solutions are particularly suitable for facilitating the assembly and also aesthetically appreciable. Basically, the bridge and the end piece are obtained from a wire, which is folded and shaped in such a way as to have an end which can be conventionally integrated in a hole of the lens, as a fixed pin, and a remaining portion shaped like a retaining spring which is engaged on the edge of the lens itself, contextually to its insertion, stabilizing the component; by way of example only, see EP0611978B1 (Murai et al.) or EP0819262B1 (Devercelli).

The present invention relates to rimless eyeglasses with improved fixing means, with a particular and advantageous shape of the element to be integrated in the lens in a corresponding slot, only by means of the addition of glue, in such a way as to contextually reach the various purposes hereinafter described in the detail.

### State of the art

In order to determine the state of the art related to the proposed solution for fixing the bridge and the end pieces to the lenses in eyeglasses of the rimless type, a conventional check was carried out in the patent literature, querying public archives, which led to the identification of some prior art, including:
D1: EP1087250 (Carlon et al.)
D2: WO2014044379 (Rattaro)
D3: EP0256098 (Lindberg)
D4: DE20317415 (Hsu Chai Hao)

Briefly D1 describes eyeglasses wherein the lenses have at least one hole for inserting a corresponding pin of the supporting structure, and wherein the external surface of said pin has a radial protrusion defining some hooking means of the internal hole surface. Adhesive material will also be introduced between the pin and the hole. In a different embodiment suitable for stabilizing the fixing in a more effective way, a couple of pins placed side by side like a fork is provided.

Briefly, in D2 a pressure- fixing device is proposed, for discontinuous rims, wherein for each fixing point a couple of deformable elements is provided which symmetrically protrudes in opposition from the rim itself, near a couple of slots obtained in the lens and spaced apart one from the other, in which said protrusions are pressure- inserted until when they are joined together in an integral way, being individually V- shaped and with the external wing free to move for expanding and performing opposing thrusts inside the opening.

Briefly, D3 describes a rim for rimless eyeglasses, in which the components are entirely made of folded wire, and are suitable for being fixed to the lens in an integral way inside a through opening wherein an end of said component is pressure- inserted, being shaped in an elastically deformable and stabilizing way. To this purpose, the end portion of the wire is folded over itself in such a way as to form two straight and parallel sections spaced apart one from the other and joined by a deformable fold suitable for being inserted with interference in a rectangular hole obtained in the lens, in such a way to act as a fork spring which maintains its position by pushing on the internal walls of the hole and contextually avoids excessive rotations and twists.

D4 suggests an advantageous fixing with folded wire for rimless eyeglasses of the above described type, particularly stable and easy to assemble, wherein the fold has a wider radius at its end and wherein the parallel and straight sections are spaced further apart in order to be inserted in the lens through a narrow and long rectangular opening like an eyelet, clearly protruding from the front. In a different embodiment, there is also an end portion orthogonally folded inward, like an end of stroke for the insertion.

Another pair of rimless glasses is disclosed in US 2005/094091 A1.

### Disadvantages

All the known fixing solutions for rimless eyeglasses, according to the known prior art, have defects and/or limitations to varying degrees.

A first limitation, in the opinion of the applicant, characterizing all the relevant solutions according to the shown known prior art, was found consisting in the circumstance that, especially for the solutions described in D1 and D3, it is not easy to assemble the lenses, with various possibilities of making mistakes such as an incorrect positioning and/or an unstable and short-lived integration in the holes. Therefore, it has been found that the use of metal wire for fixing purposes, in general, is disadvantageous, since it is thin and has a circular cross section, allowing sometimes excessive rotations and/or twists in the holes.

A second limitation, in the opinion of the applicant, lies in the fact that the integrated protrusions with varying cross-section, made of a deformable material like shaped pins or opposite bending wings such as in D2, pressure-inserted in through slots, are easy to assemble but do not ensure the maximum hold over the time and may become loose and come out from the lens. More generally, it is also known that the deformable materials of synthetic origin are disadvantageously affected by thermic expansions and can become loose in the blocking.

Another limitation, in the opinion of the applicant, has been found in the fixing solution according to D4, being the shape of the fixing element large- sized and not integrated, overly visible from the front side. Furthermore, it has been found that such a solution with a large-sized spring is only suitable for lenses with large thickness, whereas in the most frequent case in which lenses are normal-sized and the depth of the slot is limited, it does not allow a suitable stabilization.

A further limitation, frequently found in the above- mentioned known solutions, lies in the cracking of the lens near the slot, because of excessive internal thrusts and because of a poorly performed assembly. For example, in interference insertion solutions, the difficulty in adjusting tolerances is known, wherein an excessive interference causes cracking and/or makes the assembly difficult, while a minimal interference does not guarantee the holding.

Therefore there is the need for the companies in the field to identify improved solutions for said fixing of the bridge and of the end pieces to the lenses, particularly improved in the construction configuration and optimized in terms of resistance and holding, and also suitable for facilitating the activity of the professional optician, achieving the following intended purposes.

### Summary of the subject-matter of the invention

These and other aims are reached by the present invention according to the characteristics as in the included claims solving the arising problems by means of rimless eyeglasses (1) with discontinuous rim (10), consisting of a central bridge (101) suitable for connecting the lenses to each other (20a, 20b) and two side end pieces (102a, 102b), suitable for connecting each lens to the corresponding side temple (103a, 103b) with a hinge constraint. The bridge and the end pieces have holed end portions (106, 107), shaped with small teeth (109, 110, 111) and folded into the shape of a U in the terminal part like a bending wing (105), in such a way as to create an improved fixing element (100) which is inserted in a through slot (200) as a spring insert (104, 105) with calibrated interference (109, 202), and which stabilizes the fixing and distributes the glue in a hollow space (116, L4) at its exterior (104 -105, 201), and also at its interior (106 - 107, 117) in continuity like a transverse blocking.

### Purposes

Through the considerable creative contribution whose effect constitutes an immediate technical progress, aims and advantages are achieved.

A first advantageous aim, is to facilitate the fixing operations of the bridge and of the end pieces to the lenses, in eyeglasses of the rimless type. The invention allows the professional optician to assemble the eyeglasses in an extremely quick and safe way, considerably reducing the chance of error; in particular, the insertion of the fixing element in its position is more convenient, with less glue hardening problems in the position.

A second advantageous aim, simultaneous to said first aim, is to considerably increase the resistance of the above-mentioned fixings to the lenses of bridge and of end pieces, ensuring an extremely solid and durable holding. The proposed solution synergistically combines different fixing systems: a mechanical fixing system of the elastic type, a calibrated interference between the integrated fixing element and the slot of the lens, with improved gripping and also glue adhesion. In particular, a gluing solution is suggested wherein the adhesive material is automatically distributed in the optimal way in order to obtain side adhesion, facilitating the hardening during the setting phase, and it also crosses the fixing element itself in continuity in such a way as to create a further transverse blocking element.

A third advantageous aim, is to avoid excessive tensions near the through slots wherein the integrated fixing element is inserted, in such a way as to avoid cracking in the lenses. The suggested solution provides a fixing element which elastically interferes with said slot, adapting in an automatic and calibrated way to its shape, in coordination with its own elastic thrust deriving from combination of shape, thickness and material used.

A fourth advantageous aim is to obtain a fixing system, of the insert type integrated in through slot, which is small- sized, minimal and aesthetically pleasant and which, in particular, does not require any additional element with the exception of the transparent glue that is applied during the assembly. In this respect, it is observed that the suggested fixing is made only by means of the single folded end of bridge and end pieces, being it particularly shaped and holed.

A fifth advantageous aim, resulting from said fourth aim, is to obtain a cheap and standardized fixing, which can be adapted to all the kinds and thicknesses of lenses on the market, and which also simplifies the activity and the management of the store in an optician's shop.

A further advantage was that of simultaneously achieving various aims by optimizing the physical shape of the fixing element and of the slot where it is integrated only, in such a way as to optimize the insertion and the holding by interference or grip, as well as to optimize the hardening and the adhesion of the glue with a more effective distribution, facilitating the assembly and also stabilizing the connection between the different components over the time, to withstand prolonged stresses without loosening. Basically, a greater assembly convenience is obtained together with greater safety, lower management problems, less returns, less additional costs and greater customer satisfaction.

These and other advantages will emerge, without limitation, from the following detailed description of the preferred solution.

### Content of the drawings

Figure **1** is an axonometric view of the rimless eyeglasses, subject matter of the present invention;
Figure **2** is an orthogonal lateral view of the eyeglasses of Fig. 1.
Figure **3** is an orthogonal front view of the eyeglasses of Fig. 1.
Figure **4** is an orthogonal view from above of the eyeglasses of Fig. 1.
Figure **5** is a front view of the eyeglasses with the section plane X1 - X1 indicated.
Figure **6** is a view from above of the eyeglasses without temples, partially sectioned near said section plane X1 - X1 of Fig. 5, and with the indication of section plane X2 - X2.
Figure **7** is an enlarged detail of the fixing element inserted in the through slot, of the area highlighted by a circle in Fig. 6.
Figure **8** is a side view of the eyeglasses without temples.
Figure **9** is the side view of the previous figure, partially sectioned near said section plane X2 - X2.
Figure **10** is an enlarged detail of the fixing element inserted in the through slot, of the area marked by a circle in Fig. 9.
Figure **11** is an axonometric view of a finished end piece and ready to be inserted, wherein the fixing element subject- matter of the present invention is marked by the dashed rectangle.
Figure **12** is an orthogonal front view of the end piece of Fig. 11, developed in plane, that is corresponding to the cutting profile on plate and also superimposed on the folded profile.
Figure **13** is an orthogonal view from above of the end piece of Fig. 11.
Figure **14** is a further orthogonal front view of the end piece, as in Figs. 11 and 12, developed in plane, that is corresponding to the cutting profile on plate, wherein the sizes of the preferred embodiment are marked.
Figure **15** is an enlarged detail of the edge with entry slide and gripping small teeth, in the area marked by a circle in Fig. 14.
Figure **16** is an orthogonal view from above of the end piece of Fig. 14, developed in plane.
Figure **17** is an orthogonal front view of a finished bridge and ready to be inserted in each lens, wherein said fixing elements subject- matter of the present invention are marked by dashed rectangles.
Figure **18** is an orthogonal view from above of said bridge of Fig. 17, wherein the fixing elements are marked by dashed rectangles.
Figure **19** is an orthogonal side view of said bridge of Fig. 17 and Fig. 18, wherein the fixing element is marked by a dashed rectangle.

### Practical realization of the invention

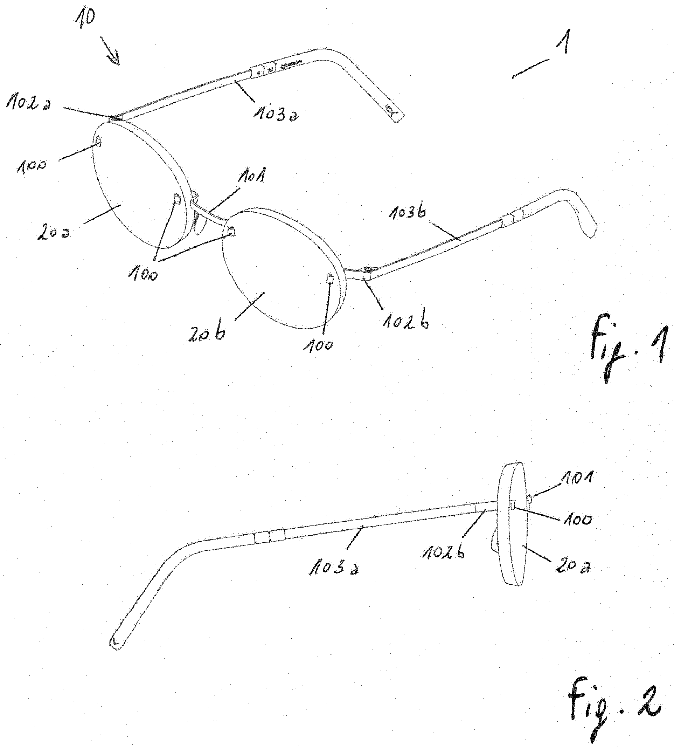

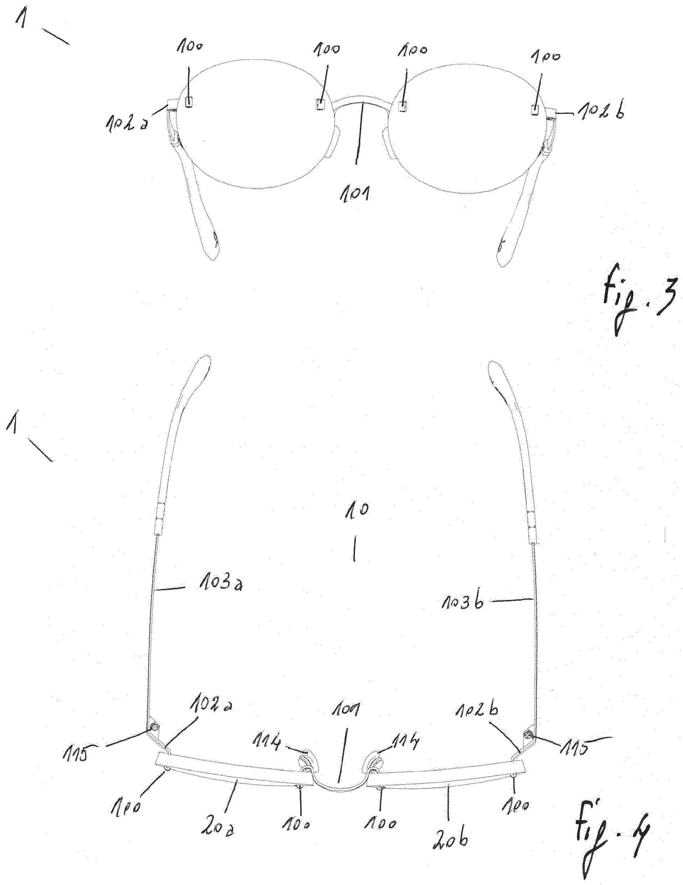

With reference also to the content of the drawings according to the figures from 1 to 19, eyeglasses of the rimless type (1), also called glasant are described, being of the type without retaining rims for the lenses (20a, 20b), which provide a frame (10) obtained from metal foil, instead of the conventional wire. Said frame (10) consists of (Figs. 1- 4):
- a central bridge (101), suitable for connecting said lenses to each other and for supporting them in the correct position of use with spacing arms (112 - 113) and supporting nose pads (114);
- two side end pieces (102a, 102b), suitable for connecting each lens to the corresponding side temple (103a, 103b) like a joint and a base element for a hinge (115);
- said side temples (103a, 103b) joined to the corresponding end pieces (102a, 102b) with a hinge constraint (115);
- improved fixing elements (100), integrated in the bridge and in the end pieces being obtained from the same metal foil, and suitable for being engaged in corresponding through slots (200) in the lenses.

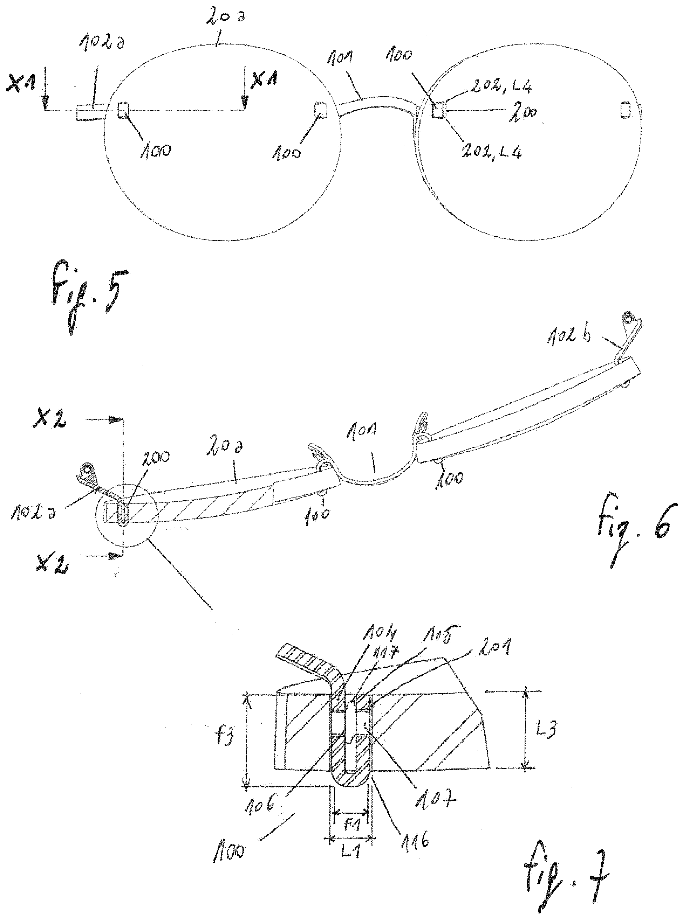

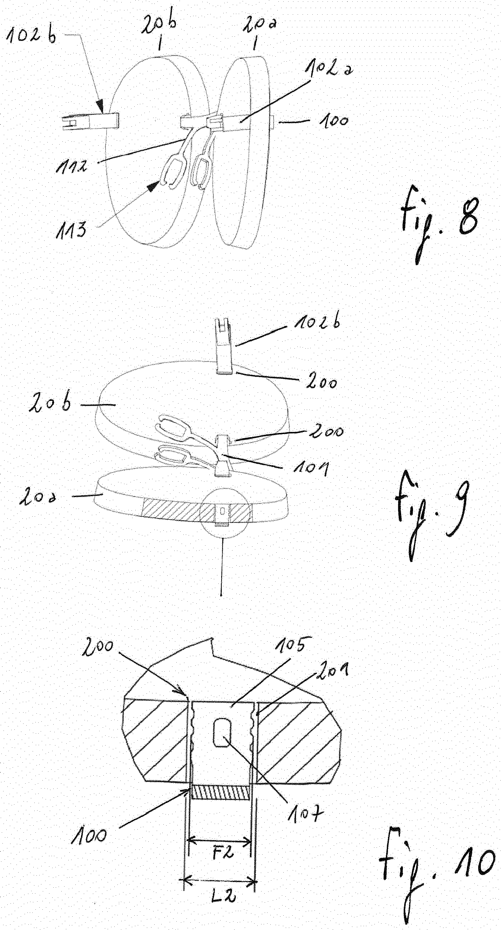

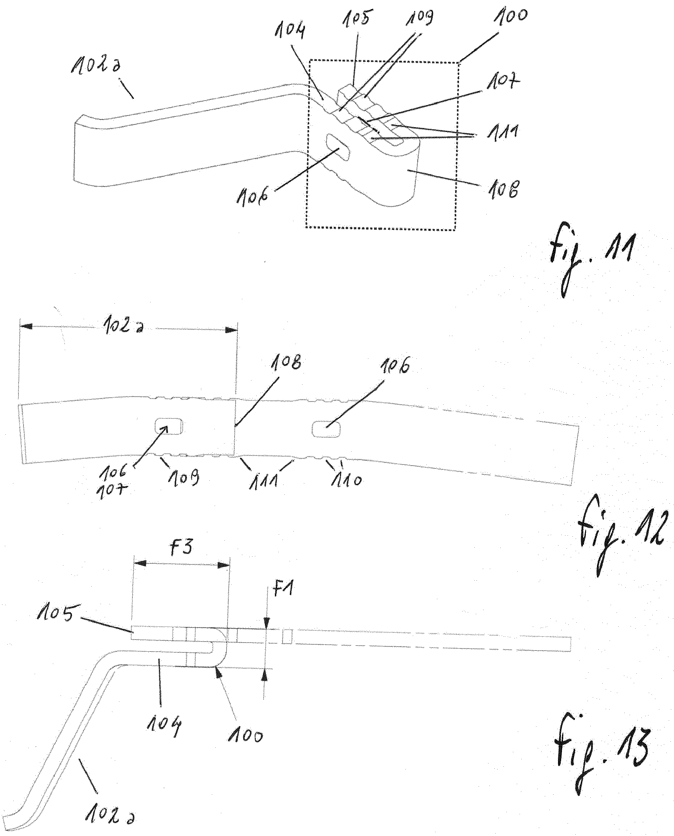

In particular, it is provided that said fixing elements (100) included in the bridge (101) and in the end pieces (102a, 102b) are improved and conformed like standardized elements, wherein the end portions are holed (106, 107) and shaped with small teeth (109, 110, 111) and folded into the shape of a U (108) in the terminal part like a bending wing (105), optimizing the insertion and the tightness of the fixing inside the slot (figs. 6, 11). The suggested fixing solution allows to contextually obtain various advantageous effects, in a synergistic way, thanks to the particular shape of said fixing element (100) and of the corresponding through slot (200) wherein it engages. Basically, said improved element (100) fits in said slot (200) as a spring insert (104, 105) with calibrated interference (109, 202), which stabilizes the fixing and the hardening of the glue, distributing it in a hollow space (116, L4) at its exterior close to the walls of the slot (104 - 105, 201), also at its interior (106 - 107, 117) in transverse continuity, in such a way as to form a transverse blocking element with the hardened glue, which is firmly fixed at the front-end (116, 201) (Figg. 5, 7, 10).

For the purpose of the invention (10, 100), the use of a resistant and elastic metallic material is provided, in combination with a section of the rectangular type at least near the fixing (100, 200), wherein the height (F2, L2) is greater than the width (F1, L1) in such a way as to obtain wings (104, 105) having a surface wide enough for stabilizing the fixing inside the slot (200), without rotations, wherein a wing (105, 108) is bending like a spring, and also so as to be holed with through openings (106 - 107) wherein the hollow is wide enough to allow the crossing of a medium-viscosity glue. For example, a metal sheet foil or strip having a constant thickness (S1) and comprised between 0,4 mm and 0,8 mm, according to the material used, is particularly suitable for the invention. Alternatively, any metal working is provided, which is suitable for obtaining a constant or variable thickness of the material comprised between 0.4 mm and 0.8 mm. Among said metallic materials, beta titanium is particularly suitable for the invention.

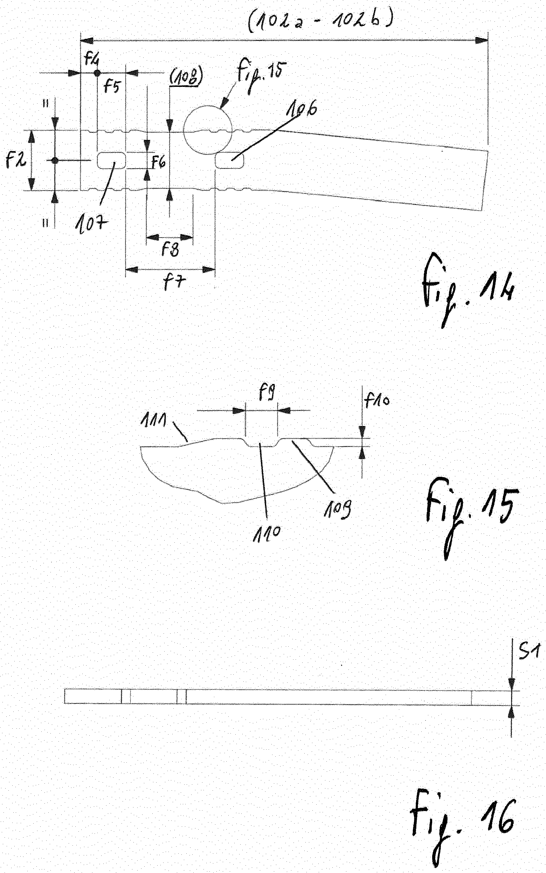

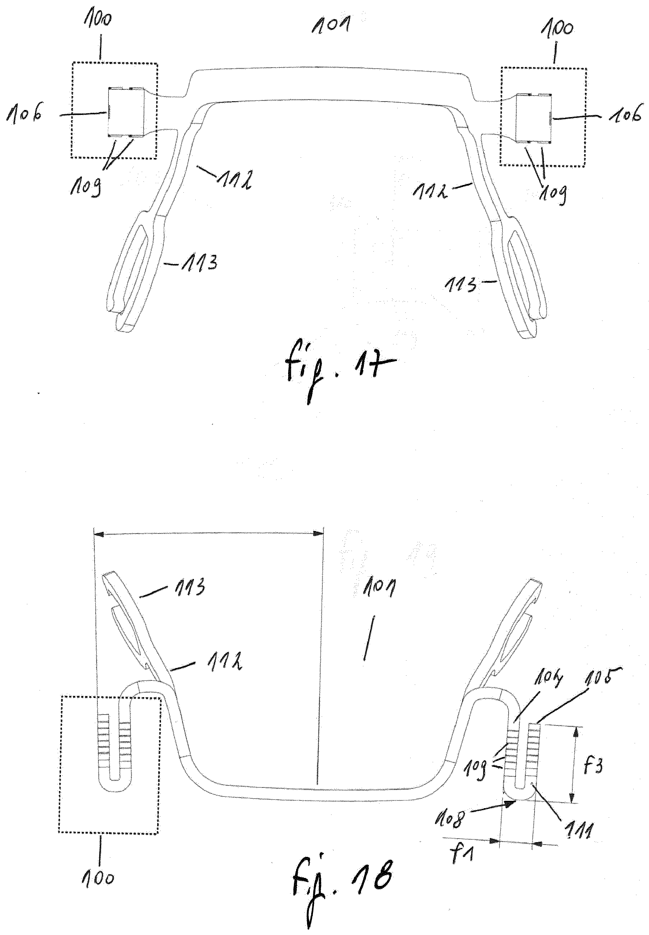

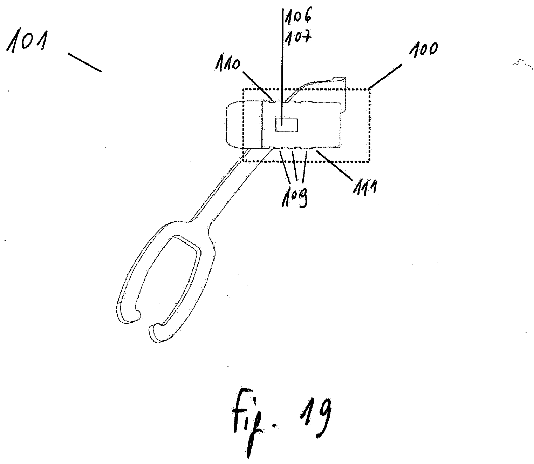

In the preferred embodiment (Figs. 5 - 19), the use of a beta titanium foil having constant thickness (S1) equal to 0.7 mm, with said height (F2) of the fixing element (100) equal to 3 mm, and with said width (F1) of the folded element (100) and ready to be inserted equal to 2.2 mm (Fig. 7) is provided. The overall depth (F3, 100) corresponds to at least the bent wing (105, 108) and therefore equal to or greater than the depth of the slot (L3). Therefore, it (F3,100) is preferably equal to 4.8 mm (Figs. 7, 14) wherein said through opening (106, 107) has a rectangular shape with rounded corners for the glue to slide, with the shortest side equal to about 0.8 mm and the longest side equal to about 1.4 mm, and is longitudinally arranged according to the rectangular shape of the wing (104, 105).

As a principle, the suggested fixing (100, 200) provides the use of a metal foil, instead of the conventional metal wire, folded at its end like a spring made up with two flat wings (104, 105) stabilizing the arrangement of the component once inserted inside a rectangular slot (200), automatically blocking it. Said spring is advantageously combined with a profile equipped with small gripping teeth (109, 110) on both sides, both above and under, interfering in a calibrated way on specific points of the slot, namely near the joint (202) between the internal walls (201) in the meaning of rounded corner, in such a way that the introduction and gripping strain is progressive, obtained by adjusting the thrust of the spring on the radius of said joint, as rounded corner (202, L4), being the maximum height of the slot (L2) greater than the maximum height of the inserted element (F2). Furthermore, in said fixing there are internal hollows (106, 107, 110, 116, 117) allowing the glue to envelop and cross the insert, creating a single body between lens (200 - 201) and metallic element (100); thanks to their shape, the glue is advantageously distributed on the external faces in a hollow space (116) obtained from said calibrated interference, in the small teeth and through the openings or holes (106, 107), wherein the hardened glue forms a new transverse blocking element (117) firmly fixed.

More in technical detail, said fixing element (100) is made up of a first wing (104) and a second wing (105), having thin and uniform thickness (S1); said first wing (104) is substantially fixed being in continuity with the component to be fixed, that is a bridge (101) or an end piece (102a, 102b), wherein the second wing (105) is bending like a spring being obtained by folding into the shape of a U (108) the terminal part on said first wing (104), in such a way as to be arranged spaced apart and parallel with respect to each other (F1). Both wings (104, 105), on the edge portion interfering with said slot (200, 201), are equipped with three small teeth (109, F9, F10) in number symmetrically obtained from corresponding lowerings of the profile (110, F2, F10), on both opposite edges of each wing, according to a profile of the lowerings (110) with tilted portions between the teeth and joined corners in such a way as to facilitate the insertion and the sliding; in particular, a lowering is provided with tilted edge in the foil portion corresponding to the first section to be inserted, that is at the front- end of the entrance of the bent element (100) (Figs. 11, 14, 15) in correspondence with the entry fold (108), like an entry slide (111) facilitating the manual introduction into the slot (200).

Both the first wing (104) and the second wing (105) are equipped with the same teeth profile (109 -111) and with the same through slot (106, 107), an opening in each wing, in such a way that said teeth and openings are exactly corresponding once that they (104, 105) are folded and superimposed (100, 108) like a spring. In particular, such a solution forms a continuous hollow which can be crossed by the glue which is applied during the assembly so as to obtain, after its hardening, a single- body transverse blocking element (117) which is fastened at the front- end to two opposite internal walls of the lens (201), in correspondence with a hollow space (116) automatically obtained from said calibrated interference (104, 105, 109, 202, L4).

Is provided that the overall depth (F3) of the fixing element (100, 104 - 105) is greater than the overall depth of the slot (L3), that is the thickness of a lens of common use for rimless eyeglasses, generally between 1.8 mm and 4.5 mm, in such a way that at least one part of the bend of the fold (108) frontally protrudes from the lens (20a, 20b) and the possibly exceeding portion of the flexible wing (105) protrudes from the opposite side.

In the preferred embodiment of the invention (1, 10, 100, 200), using said beta titanium material in a foil having a thickness of 0.7 mm, said fixing element (100) has a height (F2) equal to 3 mm with a tolerance equal to +/- 0.03 mm, and a width (F1) equal to 2 mm with a tolerance equal to +/- 0.03 mm; with such sizes (100), a through slot (200) is suitable having a height (L2) equal to 3.4 mm with a tolerance equal to +/- 0.03 mm, a width (L1) equal to 2.2 mm with a tolerance equal to +/- 0.03 mm and a radius (L4) of joint (202) as rounded corner between the internal walls (201) equal to 0.6 mm with a tolerance equal to +/- 0.2 mm. In that case said interference between said fixing element (100, 109) and said through slot (200, 202, L4) is comprised between 0 mm and + 0.2 mm, in height (F2, L2), while it is comprised between 0 mm and + 0.1mm in width (F1, L1).

In general, for the purposes of the invention (100, F1 - F10, S1) (200, L1 - L4) the following sizes (Figs. 7, 10 - 16, 18) are suitable:
- overall thickness of said improved fixing element (100), that is the distance between the external faces of the folded wings (104 - 105): comprised between 1.4 mm and 2.6 mm, preferably 2.2 mm:
   - (F2) maximum height of the element (100): comprised between 2 mm and 4 mm, preferably 3 mm;
   - overall depth of the element (100), at least equal to the bending wing (105): comprised between 4.5 mm and 5 mm, preferably 4.82 mm;
   - (F4) distance of the opening (107) from the end edge: comprised between 0,6 mm and 1 mm, preferably 0.8 mm;
   - (F5) width of the openings (106 - 107): comprised between 1 mm and 2 mm, preferably 1.4 mm;
   - (F6) height of the openings (106 - 107): comprised between 0.6 mm and 1.4 mm, preferably 0.8 mm;
   - (F7) distance between the two openings (106 - 107) developed in plane: comprised between 4 mm and 5 mm, preferably 4.4 mm;
   - (F8) distance at the base of the entry slides: comprised between 2 mm and 2.6 mm, preferably 2.3 mm;
   - (F9) distance at the base of the teeth: comprised between 0.2 mm and 0.6 mm, preferably 0.4 mm;
   - height of the tooth corresponding to the lowered profile: comprised between 0.06 mm and 0.14 mm, preferably 0.1 mm;
   - (S1) foil thickness: included between 0.4 mm and 0.8 mm according to the material, preferably 0.7 mm;
   - (L1) maximum internal width of the through slot (200): from 0.1 mm to 0.2 mm more with respect to said element (100, F1), in coordination with the radius of joint as rounded corner (L4);
   - (L2) maximum internal height: from 0.2 mm to 0.4 mm more with respect to said element (100, F2), in coordination with the radius of joint as rounded corner (L4);
   - (L3) overall depth, that is lens thickness: between 1.8 mm and 4.5 mm;
   - (L4) radius of the joint as rounded corner, between internal walls (201, 202): comprised between 0.4 mm and 0.8 mm, according to the aforementioned widths (F1, L1) and to said calibrated interference, preferably equal to 0.6 mm.

The suggested solution of rimless eyeglasses (1, 10, 100, 200) (Figg. 1 - 19) provides that said improved fixing element (100, F1 - F10), made as described above, is in number of two elements (100) for each lens (101, 102a, 20a) (101, 102b, 20b) individually inserted and glued in corresponding through slots (200, L1 - L4), being conformed like a standardized fixing (100, 200). Therefore, it has been experimentally found that said fixing (100, 200) which can be adapted to lenses (20a, 20b, L3) and rims (10, 101, 102) having various shapes, is extremely resistant and simplifies the assembly.

From an operational point of view, during the assembly phase, said wings (104 - 105) undergo an elastic narrowing when inserting the lens (20a - 20b, 200, 202), creating a slight external pressure on the walls of the slot (201); this pressure allows the interposed glue to adhere in an optimal way both to the metal surface and to the slot, filling up all the hollows. In particular, said hollow space (116, 202) is filled up with a uniform glue layer, and also the internal hollows are filled up through the opening (106 - 107) or hole in the wings, without solution of continuity, that is creating a single body between said walls (201) joined to them. Furthermore, the small teeth (109, 202) on the upper and lower edge of the fixing element (100) ensuring the maximum gripping effectiveness between glue and lens, both in the initial hardening phase and with hardened glue, namely when said transverse blocking element (117) is formed.

### References

(1) eyeglasses of the rimless type, also called glasant;
(10) rim of the rimless type, of the discontinuous type, made up with a central bridge and two side end pieces engaged to the side temples by means of hinges;
(100) improved fixing element, according to the present invention;
(101) bridge;
(102a, 102b) end pieces, also called side front pieces or endpieces, being respectively a right end piece (102a) and a left end piece (102b);
(103a, 103b) side temples, respectively right (103a) and left (103b);
(104) first wing of the fixing element;
(105) second wing of the fixing element, folded and flexible like a spring;
(106) first through-opening, in the first wing, like a hole;
(107) second opening, in the second wing, being the same as and aligned to the first opening;
(108) fold;
(109) gripping small teeth;
(110) lowering;
(111) entry slide;
(112) spacing arm;
(113) hooking fork for the nose pad;
(114) supporting nose pad;
(115) hinge;
(116) hollow space;
(117) glue profile through the openings, as transverse blocking;
(20a, 20b) lenses, respectively right (20a) and left (20b);
(200) slot passing through the lens, for the improved fixing element;
(201) internal wall of the slot;
(202) joint between internal walls, as rounded corner, interfering with the edge of the fixing element;
(F1, F2, F3) main sizes of the improved fixing element, being respectively: (F1) overall thickness, that is distance between the external faces of the wings, (F2) maximum height, (F3) overall depth;
(F4, F5, F6, F7) sizes of the openings in the improved fixing element, considered in the development in plan, being respectively: (F4) distance from the extreme edge, (F5) width, (F6) height, (F7) distance between the two openings;
(F8, F9, F10) sizes of the edge profile in the improved fixing element, considered in the development in plan, being respectively: (F8) distance at the base of the entry slides, (F9) distance at the base of the teeth, (F10) height of the tooth corresponding to the lowered profile;
(L1, L2, L3; L4) main sizes of the through slot, being respectively: (L1) maximum internal width, (L2) maximum internal height, (L3) overall depth of the slot or thickness of the lens, (L4) internal radius;
(S1) thickness of the metal foil.

## Claims

1. Eyeglasses of the rimless type (1), of the type without retaining rims for the lenses (20a, 20b), which provides a discontinuous frame (10) which consists of:
• a central bridge (101), suitable for connecting said lenses to each other and for supporting them in the correct position of use with spacing arms (112 - 113) and supporting nose pads (114);
• two side end pieces (102a, 102b), suitable for connecting each lens to the corresponding side temple (103a, 103b) like a joint and base element for a hinge (115);
• two side temples (103a, 103b) joined to the corresponding end pieces (102a, 102b) with a hinge constraint (115);
• means for fixing the bridge (101) and the end pieces (102a, 102b) to the lenses (20a, 20b), made up of an end portion of said bridge (101) and/or said end pieces (102a, 102b) which is directly inserted and glued in a corresponding through slot or hole, one for each fixing point, like a fixing element integrated as an insert;
said eyeglasses (1), **characterised in that** said bridge (101) and said end pieces (102a, 102b) have holed end portions (106, 107), shaped with small teeth (109, 110, 111) and folded into the shape of a U in the terminal part like a bending wing (105), creating an improved fixing element (100) which acts in the through slot (200) as a spring insert with calibrated interference (104 - 105, 109, 202), it stabilizes the fixing and distributes the glue in a hollow space (116, L4) at its exterior (104 - 105, 201) and also at its interior (106 - 107, 117), in transverse continuity like a transverse blocking; said through slot (200), having a rectangular-type configuration with a width (L1) shorter than the height (L2) and with a joint **as rounded corner** (202, L4) between the internal walls (201); said fixing element (100), made up of a first wing (104) and a second wing (105), having thin and uniform thickness (S1), wherein said first wing (104) is fixed being in continuity with said bridge (101) or end piece (102a, 102b), while the second wing (105) is bending being the terminal part folded into the shape of a U (108) on said first wing (104) being arranged spaced and parallel with respect to each other (F1); said first and second wing (104, 105), with at least three small teeth (109) symmetrically obtained from corresponding lowerings of the profile (110, F2), on both opposite edges of each wing (104, 105); and wherein said calibrated interference between said fixing element (100, 109) and the through slot (200) occurs on said joint as rounded corner (202, L4), being progressive according to the thrust of said bending wing (105) on the internal walls (201) of said slot; said first and second wing (104, 105), with a tilted edge which acts as an entry slide (111) to facilitate the introduction into said slot (100, 200), obtained with a lowering (110) in correspondence with the fold (108); said first and second wing (104, 105), provided with respective through openings (106, 107) which are corresponding between each other once they are folded and superimposed (100, 108), suitable for forming a continuous hollow which can be crossed by the glue which is applied during the assembly so as to obtain, after its hardening, a single-body transverse locking element (117) which is fastened by the heads to two opposite internal walls (201), in correspondence with a hollow space (116) which is obtained from said calibrated interference (104, 105, 109, 202, L4); and wherein the overall depth (F3) of said fixing element (100) is greater than the overall depth of the slot (L3) so that the loop of the fold (108) protrudes from the lens (20a, 20b) frontally; said rimless eyeglasses (1), with said fixing element (100) being two elements (100) in number for each lens (101, 102a, 20a) (101, 102b, 20b), inserted and glued in corresponding through slots (200), which (100, 200) are shaped like a standardized fixing which can be adapted to differently shaped lenses (20a, 20b, L3) and frames (10).

2. Eyeglasses of the rimless type (1), according to claim 1, **characterised in that** said bridge (101) and said end pieces (102a, 102b), with said fixing element (100), are made of an elastic-type metallic material.

3. Eyeglasses of the rimless type (1), according to claim 2, **characterised in that** said material is beta titanium.

4. Eyeglasses of the rimless type (1), according to claim 2 or 3, **characterised in that** said material is in foil or strip form having constant thickness (S1), between 0.4 mm and 0.8 mm.

5. Eyeglasses of the rimless type (1), according to claim 1 or 2 or 3 or 4, **characterised in that** said through slot (200) has a height (L2) equal to 3.4 mm with a tolerance equal to +/- 0.03 mm, a width (L1) equal to 2.2 mm with a tolerance equal to +/- 0.03 mm and a radius (L4) of joint as rounded corner (202) between the internal walls (201) equal to 0.6 mm with a tolerance equal to +/- 0.2 mm; and wherein said fixing element (100) has a height (F2) equal to 3 mm with a tolerance equal to +/- 0.03 mm, and a width (F1) equal to 2 mm with a tolerance equal to +/- 0.03 mm; and wherein the interference between said fixing element (100, 109) and said through slot (200, 202, L4) is between 0 mm and + 0.2 mm, in height (F2, L2), while it is between 0 mm and + 0.1mm in width (F1, L1).

6. Eyeglasses of the rimless type (1), according to the previous claim, **characterised in that** said fixing element (100) is in a beta titanium foil having constant thickness (S1) equal to 0.7 mm.

7. Eyeglasses of the rimless type (1), according to claim 1 or 2 or 3 or 4, **characterised in that** said fixing element (100, F1 - F10, S1) (200, L1 - L4) and said through slot (200) have the following size: (F1) is between 1.4 mm and 2.6 mm, (F2) is between 2 mm and 4 mm; (F3) is between 4.5 mm and 5 mm, (F4) is between 0.6 mm and 1 mm, (F5) is between 1 mm and 2 mm, (F6) is between 0.6 mm and 1.4 mm, (F7) is between 4 mm and 5 mm, (F8) is between 2 mm and 2.6 mm, (F9) is between 0.2 mm and 0.6 mm, (F10) is between 0.06 mm and 0.14 mm, (S1) is between 0.4 mm and 0.8 mm, (L1) measures from 0.1 mm to 0.2 mm more than said element (100, F1), (L2) measures from 0.2 mm to 0.4 mm more than said element (100, F2), (L3) is between 1.8 mm and 4.5 mm, (L4) is between 0.4 mm and 0.8 mm.

## Patentansprüche

1. Randlose Brille Typ (1), ohne Fassung für die Gläser (20a, 20b), die einen unterbrochenen Rahmen (10) aufweist, bestehend aus:
• einem zentralen Steg (101), der dazu geeignet ist, die Gläser miteinander zu verbinden und sie in der richtigen Trageposition mit Abstandshaltern (112 - 113) und Naseauflagen (114) zu halten;
• zwei seitlichen Bügelenden (102a, 102b), die dazu geeignet sind, jedes Glas mit dem entsprechenden seitlichen Bügel (103a, 103b) wie ein Gelenk- und Basiselement für ein Scharnier (115) zu verbinden;
• zwei Seitenbügel (103a, 103b), die mit den entsprechenden Endstücken (102a, 102b) durch eine Scharnierbeschränkung (115) verbunden sind;
• Mittel zum Befestigen des Stegs (101) und der Endstücke (102a, 102b) an die Gläser (20a, 20b), bestehend aus einem Endabschnitt des Stegs (101) und/oder der Endstücke (102a, 102b), der direkt in einen entsprechenden Durchgangsschlitz oder ein Loch, jeweils eins pro Befestigungspunkt, wie ein als Einsatz integriertes Befestigungselement, eingeführt und geklebt wird;
Die Brille (1) ist **dadurch gekennzeichnet, dass** der Steg (101) und die Endstücke (102a, 102b) mit kleinen Zähnen versehene, gelochte Endabschnitte (106, 107) aufweisen (109, 110, 111) und am Endteil wie ein gebogener Flügel (105) in U-Form gebogen sind, wodurch ein verbessertes Befestigungselement (100) entsteht, das im Durchgangsschlitz (200) als Federeinsatz mit kalibrierter Passung (104 - 105, 109, 202) fungiert, die Befestigung stabilisiert und den Klebstoff in einem Hohlraum (116, L4) an seiner Außenseite (104 - 105, 201) und auch an seiner Innenseite (106 - 107, 117) in quer verlaufender Kontinuität wie eine Querverriegelung; wobei der Durchgangsschlitz (200) eine rechteckige Konfiguration mit einer Breite (L1) aufweist, die kürzer als die Höhe ist (L2), und mit einer Verbindung als **abgerundete Ecke** (202, L4) zwischen den Innenwänden (201); wobei das Befestigungselement (100), das aus einem ersten Flügel (104) und einem zweiten Flügel (105) besteht, die beide dieselbe gleichmäßige Dicke (S1) aufweisen, wobei der erste Flügel (104) in Verbindung mit der Brücke (101) oder dem Endstück (102a, 102b) befestigt ist, während der zweite Flügel (105) gebogen und als Endteil in U-Form (108) am ersten Flügel (104) angeordnet ist, wo beide Flügel (104, 105) voneinander Abstand haltend und parallel zueinander (F1) angeordnet sind; wo der erste und der zweite Flügel (104, 105) mindestens drei kleine Zähne (109) aufweisen, die symmetrisch aus entsprechenden Vertiefungen des Profils (110, F2) an beiden gegenüberliegenden Kanten von jedem Flügel (104, 105) erzielt werden; und mit mindestens drei kleinen Zähnen (109), die symmetrisch aus entsprechenden Vertiefungen des Profils (110, F2) an beiden gegenüberliegenden Kanten jedes Flügels (104, 105) hervorgehen; wobei die kalibrierte Interferenz zwischen dem Befestigungselement (100, 109) und dem Durchgangsschlitz (200) an der Verbindungsstelle als abgerundete Ecke (202, L4) hervortritt, die entsprechend dem Druck des gebogenen Flügels (105) auf die Innenwände (201) des Schlitzes progressiv ist; wobei der erste und der zweite Flügel (104, 105) eine geneigte Kante aufweisen, die als Gleitschiene (111) dient, um das Einführen in den Schlitz (100, 200) zu erleichtern, der mit einer Senkung (110) in Übereinstimmung mit der Biegung (108) erzielt wird; wobei der erste und der zweite Flügel (104, 105) mit entsprechenden Öffnungen (106, 107) versehen, die einander entsprechen, sobald sie sich überlagern und übereinander liegen (100, 108), geeignet, einen durchgehenden Hohlraum zu bilden, der von dem während der Montage aufgetragenen Klebstoff durchquert werden kann, um nach Aushärtung desselben, ein einteiliges Querverriegelungselement (117) zu erzeugen, das mit Köpfen an zwei gegenüberliegenden Innenwänden (201) befestigt ist. in Übereinstimmung mit einem Hohlraum (116), der aus der kalibrierten Interferenz (104, 105, 109, 202, L4) gewonnen wird; und wobei die gesamte Tiefe (F3) des Befestigungselements (100) größer ist als die gesamte Tiefe des Schlitzes (L3), sodass die Biegung der Falte (108) frontal aus dem Glas (20a, 20b) herausragt; wobei die randlose Brille (1) mit dem Befestigungselement (100) zwei Elemente (100) pro Glas (101, 102a, 20a) beinhaltet (101, 102b, 20b) die in entsprechende Durchgangsschlitze (200) eingesetzt und eingeklebt sind, wobei diese (100, 200) wie eine standardisierte Befestigung geformt sind, die an unterschiedlich geformte Gläser (20a, 20b, L3) und Fassungen (10) angepasst werden kann.

2. Randlose Brille (1) gemäß Anspruch 1, **dadurch gekennzeichnet, dass** der Steg (101) und die Endstücke (102a, 102b) mit dem Befestigungselement (100) aus einem elastischen Metallmaterial bestehen.

3. Randlose Brille (1) gemäß Anspruch 2, **dadurch gekennzeichnet, dass** das Material Beta-Titan ist.

4. Randlose Brille (1) gemäß Anspruch 2 oder 3, **dadurch gekennzeichnet, dass** das Material in Form einer Folie oder eines Streifens eine konstante Dicke (S1) zwischen 0,4 mm und 0,8 mm hat.

5. Randlose Brille (1) gemäß Anspruch 1 oder 2 oder 3 oder 4, **dadurch gekennzeichnet, dass** der Durchgangsschlitz (200) eine Höhe (L2) von 3,4 mm mit einer Toleranz von +/- 0,03 mm, eine Breite (L1) von 2,2 mm mit einer Toleranz von +/- 0,03 mm und einen Radius (L4) der Verbindung als abgerundete Ecke (202) zwischen den Innenwänden (201) von 0,6 mm mit einer Toleranz von +/- 0,2 mm aufweist; wobei das Befestigungselement (100) eine Höhe (F2) von 3 mm mit einer Toleranz von +/- 0,03 mm und eine Breite (F1) von 2 mm mit einer Toleranz von +/- 0,03 mm aufweist; und wobei die Überlappung zwischen Befestigungselement (100, 109) und Durchgangsschlitz (200, 202, L4) in der Höhe (F2, L2) zwischen 0 mm und + 0,2 mm beträgt, während sie in der Breite (F1, L1) zwischen 0 mm und + 0,1 mm beträgt.

6. Randlose Brille (1) gemäß dem vorherigen Anspruch, **dadurch gekennzeichnet, dass** das Befestigungselement (100) aus einer Beta-Titanfolie von konstanter Dicke (S1) von 0,7 mm besteht.

7. Randlose Brille (1) gemäß Anspruch 1 oder 2 oder 3 oder 4, **dadurch gekennzeichnet, dass** das Befestigungselement (100, F1 - F10, S1) (200, L1 - L4) und der Durchgangsschlitz (200) folgende Abmessungen haben: (F1) Zwischen 1,4 mm und 2,6 mm, (F2) beträgt zwischen 2 mm und 4 mm; (F3) zwischen 4,5 mm und 5 mm, (F4) zwischen 0,6 mm und 1 mm, (F5) zwischen 1 mm und 2 mm, (F6) zwischen 0,6 mm und 1,4 mm, (F7) zwischen 4 mm und 5 mm, (F8) zwischen 2 mm und 2,6 mm, (F9) zwischen 0,2 mm und 0,6 mm, (F10) zwischen 0,06 mm und 0,14 mm, (S1) zwischen 0,4 mm und 0,8 mm, (L1) ist 0,1 mm bis 0,2 mm länger als das Element (100, F1), (L2) ist 0,2 mm bis 0,4 mm länger als das Element (100, F2), (L3) misst zwischen 1,8 mm und 4,5 mm, (L4) misst zwischen 0,4 mm und 0,8 mm.

## Revendications

1. Lunettes de type sans monture (1), du type sans monture pour les verres (20a, 20b), offrant une bordure discontinue (10) comprenant :
• un pont central (101), conçu pour connecter lesdits verres l'un à l'autre et pour les supporter dans la position d'utilisation correcte avec des branches d'espacement (112 - 113) et des plaquettes nasales de support (114) ;
• deux embouts latéraux (102a, 102b), conçus pour connecter chaque verre à la branche latérale correspondante (103a, 103b) comme un élément de base de jonction pour une charnière (115) ;
• deux branches latérales (103a, 103b) jointes aux embouts correspondants (102a, 102b) avec une entrave de charnière (115) ;
• des moyens de fixation du pont (101) et des embouts (102a, 102b) aux verres (20a, 20b), constitués d'une portion de l'extrémité dudit pont (101) et/ou desdits embouts (102a, 102b) directement insérée et collée dans un cran ou un trou traversant correspondant, un pour chaque point de fixation, comme un élément de fixation intégré en tant qu'insert ;
lesdits verres (1), **caractérisées en ce que** ledit pont (101) et lesdits embouts (102a, 102b) présentent des portions d'extrémité dotées de trous (106, 107), de petites dents (109, 110, 111) et courbées en U dans la partie terminale comme une aile courbée (105), créant ainsi un élément de fixation amélioré (100) qui agit dans le cran traversant (200) comme un insert à ressort à interférence étalonnée (104 - 105, 109, 202), qui stabilise la fixation et répartit la colle dans un espace creux (116, L4) sur son extérieur (104 - 105, 201) ainsi que son intérieur (106 - 107, 117), dans une continuité transversale en tant que blocage transversal ; ledit cran transversal (200) présentant une configuration rectangulaire avec une largeur (L1) plus courte que la longueur (L2) et avec un **angle arrondi** de jonction (202, L4) entre les parois internes (201) ; ledit élément de fixation (100), constitué d'une première aile (104) et d'une deuxième aile (105), présentant une épaisseur mince et uniforme (S1), ladite première aile (104) étant fixée dans la continuité dudit pont (101) ou de l'embout (102a, 102b), alors que la deuxième aile (105) est courbée en tant que pièce terminale en U (108) sur ladite première aile (104) de manière espacée et parallèle l'une par rapport à l'autre (F1) ; lesdites première et deuxième ailes (104, 105), dotées d'au moins trois petites dents (109) obtenues symétriquement par les abaissements correspondants du profilé (110, F2) sur les deux bords opposés de chaque aile (104, 105) ; et ladite interférence étalonnée entre ledit élément de fixation (100, 109) et le cran traversant (200) intervenant sur ledit angle arrondi de jonction (202, L4), de manière progressive en fonction de la traction de ladite aile courbée (105) sur les parois internes (201) dudit cran ; lesdites première et deuxième ailes (104, 105), étant dotées d'un bord incliné agissant comme un curseur d'entrée (111) pour faciliter l'introduction dans ledit cran (100, 200), obtenu par un abaissement (110) en correspondance avec le pli (108) ; lesdites première et deuxième ailes (104, 105), dotées chacune d'ouvertures traversantes (106, 107) en correspondance l'une avec l'autre une fois qu'elles sont repliées et superposées (100, 108), étant conçues pour former un creux continu qui peut être comblé de colle appliquée durant l'assemblage de manière à obtenir, après durcissement, un élément de verrouillage transversal monobloc (117) fixé par les têtes aux deux parois internes opposées (201), en correspondance avec un espace creux (116) obtenu par ladite interférence étalonnée (104, 105, 109, 202, L4) ; et la profondeur totale (F3) dudit élément de fixation (100) étant supérieure à la profondeur totale du cran (L3) de manière à ce que la boucle du pli (108) soit en saillie par rapport au verre (20a, 20b) sur le devant ; lesdits verres sans monture (1) avec ledit élément de fixation (100) constituant deux éléments (100) pour chaque verre (101, 102a, 20a) (101, 102b, 20b), insérés et collés dans les crans traversants correspondants (200), (100, 200) correspondant à une fixation standardisée qui peut être adaptée à différentes formes de verre (20a, 20b, L3) et bordures (10).

2. Lunettes de type sans monture (1), selon la revendication 1, **caractérisées en ce que** ledit pont (101) et lesdits embouts (102a, 102b), avec ledit élément de fixation(100), sont réalisés dans un matériau métallique de type élastique.

3. Lunettes de type sans monture (1), selon la revendication 2, **caractérisées en ce que** ledit matériau est du bêta-titane.

4. Lunettes de type sans monture (1), selon la revendication 2 ou 3, **caractérisées en ce que** ledit matériau se présente sous forme de film ou de feuille d'une épaisseur constante (S1), entre 0,4 mm et 0,8 mm.

5. Lunettes de type sans monture (1), selon la revendication 1 ou 2 ou 3 ou 4, **caractérisées en ce que** ledit cran traversant (200) a une hauteur (L2) égale à 3,4 mm avec une tolérance égale à +/- 0,03 mm, une largeur (L1) égale à 2,2 mm avec une tolérance égale à +/- 0,03 mm et un rayon (L4) de l'angle arrondi de jonction (202) entre les parois internes (201) égal à 0,6 mm avec une tolérance égale à +/- 0,2 mm ; ledit élément de fixation (100) ayant une hauteur (F2) égale à 3 mm avec une tolérance égale à +/- 0,03 mm et une largeur (F1) égale à 2 mm avec une tolérance égale à +/- 0,03 mm ; et ladite interférence entre ledit élément de fixation (100, 109) et ledit cran traversant (200, 202, L4) étant compris entre 0 mm et + 0,2 mm en hauteur (F2, L2), alors qu'il est compris entre 0 mm et + 0,1 mm en largeur (F1, L1).

6. Lunettes de type sans monture (1), selon la revendication précédente, **caractérisées en ce que** ledit élément de fixation (100) est réalisé dans un film de bêta-titane d'une épaisseur constante (S1), égale à 0,7 mm.

7. Lunettes de type sans monture (1), selon la revendication 1 ou 2 ou 3 ou 4, **caractérisée en ce que** ledit élément de fixation (100, F1 - F10, S1) (200, L1 - L4) et ledit cran traversant (200) ont les dimensions suivantes : (F1) entre 1,4 mm et 2,6 mm, (F2) entre 2 mm et 4 mm; (F3) entre 4,5 mm et 5 mm, (F4) entre 0,6 mm et 1 mm, (F5) entre 1 mm et 2 mm, (F6) entre 0,6 mm et 1,4 mm, (F7) entre 4 mm et 5 mm, (F8) entre 2 mm et 2,6 mm, (F9) entre 0,2 mm et 0,6 mm, (F10) entre 0,06 mm et 0,14 mm, (S1) entre 0,4 mm et 0,8 mm, (L1) de 0,1 mm à 0,2 mm de plus que ledit élément (100, F1), (L2) de 0,2 mm à 0,4 mm de plus que ledit élément (100, F2), (L3) entre 1,8 mm et 4,5 mm, (L4) entre 0,4 mm et 0,8 mm.
